# EUROPÄISCHE PATENTSCHRIFT

(11) **EP 0 271 726 B1**
(45) Veröffentlichungstag und Bekanntmachung des Hinweises auf die Patenterteilung: **30.08.1995**
(21) Anmeldenummer: 87116932.2
(22) Anmeldetag: 17.11.1987
(51) Int. Cl.: A21B 3/10

(54) **Beleuchtungseinrichtung für einen Backofen**
Lighting device for a baking oven
Dispositif d'éclairage pour four de boulangerie

(30) Priorität: 18.12.1986 DE 3643371
(43) Veröffentlichungstag der Anmeldung: 22.06.1988
(73) Patentinhaber: Bosch-Siemens Hausgeräte GmbH, 81669 München (DE)
(72) Erfinder: Nitzinger, Karl, Dipl.-Ing., D-8225 Tranreut (DE); Gerl, Josef, D-8221 Palling (DE); Steiner, Herbert, D-8220 Traunstein (DE); Hess, Helmut, Dipl.-Ing., D-8225 Traunreut (DE)

(56) Entgegenhaltungen:
- EP-A- 0 120 536
- DE-A- 2 913 542
- DE-A- 3 246 437
- DE-U- 8 524 859
- DE-U- 8 609 316
- US-A- 20 324
- PHILIPS Produktliste "Licht/Batterien" 83/84

## Beschreibung

Die Erfindung bezieht sich auf eine Beleuchtungseinrichtung für einen Backofen.

Bei bekannten Beleuchtungseinrichtungen für Backöfen werden üblicherweise Glühlampen verwendet mit einer Betriebsspannung von 220V und einer Leistungsaufnahme von 25W. Hierfür ist in der Muffelwand eine relativ große Öffnung vorgesehen, die durch eine Glasabdeckung abdeckbar ist und hinter der eine metallische Halterung für eine Lampenfassung montiert ist. Die Lampe befindet sich hierbei im wesentlichen in einem Leuchtenhohlraum hinter der Muffelwand. Eine solche Beleuchtungseinrichtung ist bekannt durch DE-OS 29 13 542. Bei Betrieb der Lampe findet eine relativ starke Wärmeentwicklung statt, auch im Bereich der Lampenfassung und des metallischen Trägers. Um eine Überhitzung an dieser Stelle zu vermeiden, muß diese Wärme nach außen abgeführt werden, wozu es meist erforderlich ist, im Bereich des metallischen Trägers die, die Backofenmuffel ansonsten umgebende Wärmedämmschicht zu unterbrechen. Ein starker Wärmetransport findet an dieser Stelle auch Statt durch die relativ große Muffelöffnung hindurch vom Backraum her, insb. bei pyrolytischem Reinigungsbetrieb des Backofens-Diese Muffelöffnung muß so groß sein, daß die relativ großvolumige Lampe leicht vom Innenraum des Backofens her montier werden kann. Ein solcher Wärmetransport nach außen hin ist relativ unproblematisch, wenn sich die Beleuchtungseinrichtung an der Rückseite des Backofens befindet, wo eine Wärmeentsorgung keine großen Schwierigkeiten bietet. Problematisch wird es dann, wenn die Beleuchtungseinrichtung an einer oder an beiden seitlichen Muffelwänden angebracht werden soll. Hier soll insb. bei Einbaubacköfen eine seitliche Wärmeabstrahlung möglichst weitestgehend vermieden werden wegen unmittelbar angrenzender Einbaumöbel oder dergleichen. Zu diesem Zweck soll die Wärmedämmschicht entlang diesen seitlichen Muffelwänden möglichst nicht unterbrochen sein. Problematisch ist ferner der Einbau solcher Beleuchtungseinrichtungen im Bereich der vorgenannten Seitenwände, da im Gegensatz zur Muffelrückwand dort wenig Einbauraum vorhanden ist.

Bei bekannten Beleuchtungseinrichtungen hat es sich als erforderlich gezeigt (US Re 20 324), die Lampe durch die Backofenisolierung hindurch zu führen und von außerhalb des Backofenraums zum Zwecke der Kühlung belüften zu lassen; dies erfordert in diesem Bereich eine Durchbrechung der Backofenisolierung.

Der vorliegenden Erfindung liegt die Aufgabe zugrunde, eine Beleuchtungseinrichtung so auszugestalten, daß sich hinsichtlich der Anordnung der Beleuchtungseinrichtung zum Zwecke einer optimalen Ausleuchtung des Backraumes keine geometrischen oder thermischen Schwierigkeiten mehr ergeben.

Diese Aufgabe wird erfindungsgemäß gelöst durch die im Patentanspruch 1 angegebenen Maßnahmen. Vorteilhafte Ausgestaltungen der Erfindung ergeben sich aus den nachfolgenden Patentansprüchen.

Die Verwendung einer Niederspannungslampe üblicher Bauart, insb. einer an sich bekannten Halogenlampe macht es möglich, den Wärmeanfall bei Betrieb der Lampe sehr gering zu halten, so daß sich eine besondere Wärmeabführung erübrigt. Insbesondere besteht damit nicht mehr die Notwendigkeit, die Warmedämmschicht zu unterbrechen, so daß diese Beleuchtungseinrichtungen bevorzugt an den seitlichen Muffelwänden angeordnet sein können, wo sich eine hervorragende Ausleuchtung des Backraumes ergibt. Ferner sind derartige Niederspannungslampen und dazugehörige Lampenfassungen so klein, daß für deren Anordnung nur sehr wenig Einbauraum erforderlich ist. Gleichzeitig kann die Öffnung in der betreffenden Muffelwand durch die Kleinheit der Niederspannungslampe so gering gehalten werden, daß ein wesentliche Wärmeaustritt bei Betrieb des Backofens durch diese Öffnung hindurch nicht erfolgt. Die Kleinheit der Niederspannungslampe, z.B. der Halogenlampe, macht es auch möglich, einen wesentlichen Teil der Lampe in den Backraum hinein ragen zu lassen, so daß eine bestmögliche Ausleuchtung des Backraumes erhalten werden kann. Hierbei ist es vorteilhaft, wenn im Bereich dieser Öffnung an der Muffelwand ein Reflektor angebracht ist bzw. die Muffelwand selbst in diesem Bereich als Reflektor ausgebildet ist. Eine Blendwirkung beim Hineinschauen in den Backraum kann vermieden werden durch Anordnung eines Blendenschirmes, der die 'Lampe zur Backofentür hin abschirmt.

Durch die Verwendung von Niederspannungslampen erhält man einen sehr geringen Raumbedarf zur Anordnung der Beleuchtungseinrichtungen, eine bestmögliche Ausleuchtung des Backraumes insb. bei Verwendung von Halogenlampen, erhöhte Sicherheit durch Verwendung einer Kleinspannung und nicht zuletzt eine geringe Erschütterungsempfindlichkeit der Beleuchtungseinrichtung.

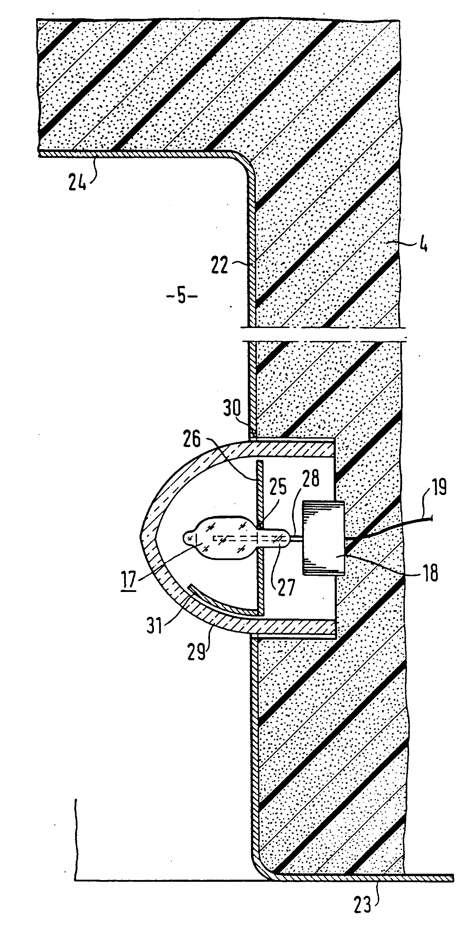

Vorteilhafte Einzelheiten der Erfindung ergeben sich aus dem in der Zeichnung dargestellten und nachstehend beschriebenen Ausführungsbeispiel.

Die Figur zeigt die Schnittdarstellung einer seitlichen-Muffelwand eines Backofens mit darin montierter Beleuchtungseinrichtung,

Beim Ausführungsbeispiel gemäß der Figur ist ein Teil der Ofenmuffel mit seitlicher Muffelwand 22, Muffelflansch 23 und rückseitiger Muffewand 24 dargestellt. Die Ofenmuffel ist umgeben mit einer Wärmedämmschicht 4. Bei diesem Ausführungsbeispiel sind in zwei gegenüberliegenden seitlichen Muffelwänden 22 Beleuchtungseinrichtungen angeordnet. Zu diesem Zweck ist hinter einer kleinen Öffnung 25 in der Muffelwand 22 bzw. in einem, einen Teil der Muffelwand 22 darstellenden Reflektorplättchen eine Lampenfassung 18 montiert, die seitlich und nach hinten hin durch die praktisch ununterbrochene ;Wärmedämmschicht 4 umgeben ist. Die Öffnung 25 dient zum Einstecken einer als Halogenlampe ausgebildeten Niederspannungslampe 17, die beim Ausführungsbeispiel mit einem verjüngten Fußteil 27 praktisch bündig in die Öffnung 25 eingesteckt ist und mit ihren elektrischen Anschlußelementen 28 in der Lampenfassung 18 kontaktiert ist. Die von der Lampenfassung 18 abgehende elektrische Zuleitung 19 ist in der Wärmedämmschicht 4 verlegt. Es handelt sich bei diesem Ausführungsbeispiel um eine Halogen-Niederspannungslampe mit einer Betriebsspannung von 12V und einer installierten Leistung von 5W. Diese Lampe 17 ragt in den Garraum, 5 Praktisch vollständig hinein und wird umhüllt von einer - gewölbten Glasabdeckung 29, die, wie nicht weiter dargestellt, z.B. in ein Rohrgewinde der Muffelwand einschraubbar ist oder sonst wie auf der Muffelwand befestigbar ist. Das Reflektroplättchen 26 verschließt im wesentlichen die größere Öffnung 30 für die Glasabdeckung 29 und reflektiert die von der Lampe 17 ausgehenden Lichtstrahlen in Richtung des Backraumes 5. Es bildet gleichzeitig eine Sperre für die vom Backraum 5 ausgehende Wärme bzw. Wärmestrahlung. Mit dem Reflektorplättchen 26 unmittelbar verbunden ist ein gewölbter und vom Reflektorplättchen abstehender Blendenschirm 31, der die Lampe 17 zur Backofentür hin abschirmt, so daß diese Lampe vom Betrachter nicht zu sehen ist.

Bei dem beschriebenen Ausführungsbeispiel muß die normale Netzspannung auf einen Niederspannungswert transformiert werden. Der hierzu erforderliche Transformator ist an einer geeigneten Stelle angebracht bzw. es wird der z.B. für das Bedientableau des Backofens schon vorgesehene Transformator mit verwendet.

Selbstverständlich besteht im Rahmen der Erfindung die Möglichkeit, die kleine Öffnung 25 unmittelbar in der Muffelwand anzubringen. Ferner besteht die Möglichkeit, die erläuterten Beleuchtungseinrichtungen auch für Öfen zu verwenden, bei denen das Gargut mittels Mikrowellenenergie oder aber mit einer Kombination von thermischer Energie und Mikrowellenenergie erhitzt wird. In diesen. Fällen ergibt sich der Vorteil, daß durch die Kleinheit der Niederspannungslampen, z.B. Halogenlampen, eine Zerstörung der praktisch ungeschützt in den Garraum hinein ragenden Lampe durch die Mikrowellenenergie verhindert wird. Ferner ergibt sich hierbei der Vorteil, daß bei ihnenliegender Anordnung der Lampe eine Mikrowellenabstrahlung außerhalb des Ofenraumes ohne aufwendige Schutzmaßnahmen verhindert wird.

## Patentansprüche

1. Beleuchtungseinrichtung für einen Backofen, der an wenigstens einer Begrenzungswand (22) des Backraumes (5) eine Lampe mit Lampenfassung aufweist, welche Lampe vom Backraum (5) aus in die Lampenfassung einfügbar ist, wobei die Lampe eine Niederspannungslampe (17) ist, die im wesentlichen in den Ofenraum (5) hineinragt, in der Begrenzungswand (22) bzw. bei einem die Begrenzungswand fortführenden Reflektor (26) in diesem höchstens eine klein bemessene, zur Durchführung der Lampe (17) oder ihrer elektrischen Anschlußelemente (28) geeignete Öffnung (30,25) vorgesehen ist und die hinter der Begrenzungswand (22) befestigte Lampenfassung (18) durch eine die Begrenzungswand (22) umgebende Wärmedämmschicht (4) überdeckt ist.

2. Beleuchtungseinrichtung nach Anspruch 1, dadurch gekennzeichnet, daß die Lampe (17) nur mit ihrem Lampenfußteil (27) bzw. Anschlußteil die entsprechend klein bemessene Öffnung (25) bis zur Lampenfassung (18) durchragt.

3. Beleuchtungseinrichtung nach einem der vorhergehenden Ansprüche, dadurch gekennzeichnet, daß die Niederspannungslampe eine Betriebsspannung von etwa 12W besitzt.

4. Beleuchtungseinrichtung nach einem der vorhergehenden Ansprüche; dadurch gekennzeichnet, daß die Niederspannungslampe (17) eine installierte Leistungsaufnahme von 5W besitzt.

5. Beleuchtungseinrichtung nach Anspruch 4, dadurch gekennzeichnet, daß die Niederspannungslampe (17) eine Halogenlampe ist.

6. Beleuchtungseinrichtung nach einem der vorhergehenden Ansprüche, dadurch gekennzeichnet, daß sie an wenigstens einer seitlichen Muffelwand (22) angeordnet ist.

7. Beleuchtungseinrichtung nach Anspruch 6, dadurch gekennzeichnet, daß die Lampe (17) durch einen Blendenschirm (31) zur Backofentür hin abgeschirmt ist,

8. Beleuchtungseinrichtung nach Anspruch 7, dadurch gekennzeichnet, daß der Blendenschirm (31) Teil des Reflektors (26) ist.

9. Beleuchtungseinrichtung nach einem der vorhergehenden Ansprüche, dadurch gekennzeichnet, daß die Lampe (17) durch eine zumindest teiltransparente, auf die Muffelwand (22) aufsetzbare Glasabdeckung (29) abgedeckt ist.

10. Beleuchtungseinrichtung nach Anspruch 9, dadurch gekennzeichnet, daß ein Teil der Glasabdeckung als Blendenschirm ausgebildet ist.

## Claims

1. Lighting equipment for a baking oven, which has a lamp with a lamp holder at at least one boundary wall (22) of the baking chamber (5), which lamp is insertable from the baking chamber (5) into the lamp holder, wherein the lamp is a low-voltage lamp (17) which substantially projects into the oven chamber (5), at most one small sized opening (30, 25) which is suitable for the passage of the lamp (17) or of its electrical connecting elements (28) is provided in the boundary wall (22) or, in the case of a reflector (26) continuing the boundary wall, in this reflector, and the lamp holder (18) fastened behind the boundary wall (22) is covered by a thermal insulating layer (4) surrounding the boundary wall (22).

2. Lighting equipment according to claim 1, characterised thereby that the lamp (17) projects only by its lamp foot part (22) or terminal part through the corresponding small sized opening (25) up to the lamp holder (18).

3. Lighting equipment according to one of the preceding claims, characterised thereby that the low-voltage lamp has an operating voltage of about 12V.

4. Lighting equipment according to one of the preceding claims, characterised thereby that the low-voltage lamp (17) has an installed power absorption of 5W.

5. Lighting equipment according to claim 4, characterised thereby that the low-voltage lamp (17) is a halogen lamp.

6. Lighting equipment according to one of the preceding claims, characterised thereby that it is arranged at at least one side muffle wall (22).

7. Lighting equipment according to claim 6, characterised thereby that the lamp (17) is screened relative to the baking oven door by a glare screen (31).

8. Lighting equipment according to claim 7, characterised thereby that the glare screen (31) is part of the reflector (26).

9. Lighting equipment according to one of the preceding claims, characterised thereby that the lamp (7) is covered by an at least partly transparent glass cover (29) placeable on the muffle wall (22).

10. Lighting equipment according to claim 9, characterised thereby that a part of the glass cover is constructed as a glare screen.

## Revendications

1. Dispositif d'éclairage pour un four, qui comporte, sur au moins une paroi limite (22) de l'espace de cuisson (5), une lampe comportant une monture de lampe et qui peut être insérée à partir de l'espace de cuisson (15) dans la monture de lampe, la lampe étant une lampe basse tension (17), qui pénètre essentiellement dans l'espace (5) du four, au maximum une ouverture de petite taille (30,25), convenant pour le passage de la lampe (17) ou de ses éléments de raccordement électrique (28), étant prévue dans la paroi limite (22) ou dans un réflecteur (26), qui prolonge la paroi limite, dans le cas où un tel réflecteur est prévu, et la monture de lampe (18) fixée en arrière de la paroi limite (22) est recouverte par une couche d'isolation thermique (4) entourant la paroi limite (22).

2. Dispositif d'éclairage selon la revendication 1, caractérisé en ce que la lampe (17) traverse, uniquement par sa partie formant pied (27) ou sa partie de raccordement, l'ouverture (25) qui est réalisée avec de faibles dimensions correspondantes, jusqu'à la monture de lampe (18).

3. Dispositif d'éclairage selon l'une des revendications précédentes, caractérisé en ce que la lampe basse tension possède une tension de service d'environ 12 W.

4. Dispositif d'éclairage selon l'une des revendications précédentes, caractérisé en ce que la lampe basse tension (10) possède une consommation de puissance installée de 5 W.

5. Dispositif d'éclairage selon la revendication 4, caractérisé par le fait que la lampe basse tension (17) est une lampe à halogène.

6. Dispositif d'éclairage selon l'une des revendications précédentes, caractérisé en ce qu'il est disposé sur au moins une paroi latérale de moufle (22).

7. Dispositif d'éclairage selon la revendication 6, caractérisé en ce que la lampe (17) est masquée par un écran formant diaphragme (31) en direction de la porte du four.

8. Dispositif d'éclairage selon la revendication 7, caractérisé en ce que l'écran formant diaphragme (31) fait partie du réflecteur (26).

9. Dispositif d'éclairage selon l'une des revendications précédentes, caractérisé en ce que la lampe (17) est recouverte par un capot en verre (29) au moins partiellement transparent, pouvant être appliqué sur la paroi (22) du moufle,

10. Dispositif d'éclairage selon la revendication 9, caractérisé en ce qu'une partie du capot en verre est agencée sous la forme d'un écran formant diaphragme.
